# EUROPÄISCHE PATENTSCHRIFT

(11) **EP 3 622 261 B1**
(45) Veröffentlichungstag und Bekanntmachung des Hinweises auf die Patenterteilung: **22.11.2023**
(21) Anmeldenummer: 18720594.3
(22) Anmeldetag: 26.04.2018
(51) Int. Cl.: G01K 3/10, G01K 13/00, A01J 9/04, G01K 1/024, B01F 27/00, B01F 35/21, B01F 35/60

(54) **RÜHRVORRICHTUNG MIT EINER ÜBERWACHUNGSEINHEIT**
STIRRING DEVICE COMPRISING A MONITORING UNIT
DISPOSITIF D'AGITATION COMPRENANT UNE UNITÉ DE SURVEILLANCE

(30) Priorität: 10.05.2017 DE 102017207899
(43) Veröffentlichungstag der Anmeldung: 18.03.2020
(73) Patentinhaber: Robert Bosch GmbH, 70442 Stuttgart (DE)
(72) Erfinder: VERPLOEGEN, Martin Jan Joseph, 71272 Renningen (DE); FERHADBEGOVIC, Bojan, 70372 Stuttgart (DE)
(86) Internationale Anmeldenummer: PCT/EP2018/060753
(87) Internationale Veröffentlichungsnummer: WO 2018/206303

(56) Entgegenhaltungen:
- WO-A2-2015/169827
- DE-A1- 3 925 053
- DE-A1-102007 021 407
- US-A1- 2004 120 215

## Beschreibung

### Stand der Technik

Die Erfindung betrifft eine Rührvorrichtung, einen Flüssigkeitsbehälter mit einer Rührvorrichtung sowie ein Verfahren zur Überwachung einer Rührvorrichtung.

Die Milchbetriebe verfügen in der Regel über einen Tank für die Zwischenlagerung der Milch. Die Größe der Tanks variiert zwischen 1000 l und 25000 l. Die Milch wird normalerweise alle zwei Tage abgeholt, wobei es Molkereien gibt, die Abholung aus Kostengründen alle drei Tage anstreben. Die Tanks sind alle mit einer Kühlanlage mit entsprechender Temperaturregelung ausgestattet.

Darüber hinaus gibt es ein oder mehrere Rührwerke, die in bestimmten Zeitabständen eingeschaltet werden, um eine entsprechende Milchqualität während der Lagerung zu gewährleisten. Durch das Rühren bzw. den Rührprozess wird eine einheitliche Milchtemperatur sichergestellt sowie eine Sedimentation verhindert. Ein Ausfall des Rührwerks kann zu einer Verschlechterung der Milchqualität führen (durch zu hohe Keimzahlen) und sogar zum vollständigen Verderben der Milch.

Im Stand der Technik wird insbesondere die Funktion des Rührwerks durch direkte Messung der jeweiligen Rührwerksdrehzahl durchgeführt, wobei der hierfür erforderliche Drehzahlsensor teurer und aufwändig zu montieren bzw. gar nicht montierbar ist, da an den drehenden Teilen kein Platz vorhanden ist. Hierbei wird ferner lediglich die Ausgangswelle des Motors erfasst, nicht die Rührwelle selbst. Dadurch bleiben defekte Kupplungen zwischen Motorwelle und Rührwelle unentdeckt. Ein frühzeitiger Hinweis auf mögliche andere oder sich anbahnende Defekte ist damit ebenfalls nicht möglich. Die Druckschrift US2004120215 A1 offenbart eine Rührvorrichtung mit einem in einem elektrischen Motor der Rührvorrichtung angeordneten Temperatursensor. Die Druckschrift DE3925053 A1 offenbart ein Güllerührgerät mit einem Temperatursensor, der zur Messung der Temperatur der flüssigen Gülle ausgelegt ist.

### Offenbarung der Erfindung

Gegenstand der vorliegenden Erfindung ist eine Rührvorrichtung gemäß Anspruch 1.

Gegenstand der vorliegenden Erfindung ist ferner ein Flüssigkeitsbehälter, insbesondere Milchtank, mit einer erfindungsgemäßen Rührvorrichtung.

Gegenstand der vorliegenden Erfindung ist außerdem ein Verfahren gemäß Anspruch 6.

Der Flüssigkeitsbehälter kann insbesondere ein Milchtank, bspw. eines Milchviehbetriebes sein.

Erfindungsgemäß umfasst die Überwachung die Überwachung von zumindest einem der nachfolgenden Fälle: Defekt, sich anbahnender Defekt, Verschleiß, Reparaturnotwendigkeit, Wartungsnotwendigkeit.

Die Temperaturerfassungseinheit kann ein oder auch mehrere Temperatursensorelement bzw. Temperatursensoren aufweisen. Die Temperaturerfassungseinheit kann eine Sendeeinheit aufweisen. Die Sendeeinheit kann ausgebildet sein, Temperaturmesswerte drahtlos, bspw. über Funk, WLAN, Bluetooth etc., und/oder leitungsgebunden zu versenden. Die Temperaturerfassungseinheit kann über ein Kabel mit der Auswerteeinheit verbunden sein, um die Temperaturmesswerte an die Auswerteeinheit zu übertragen.

Unter einer Auswerteeinheit kann im Rahmen der Erfindung eine Einheit verstanden werden, welche ausgebildet ist, Signale und/oder Daten, insbesondere Temperaturmesswerte zu verarbeiten. Die Auswerteeinheit kann einen Signalprozessor, einen Mikrocontroller oder dergleichen aufweisen. Die Auswerteeinheit kann ferner zumindest eine Speichereinheit zum Speichern von Signalen und/oder Daten, insbesondere Temperaturmesswerten aufweisen oder zu diesem Zweck mit einer Speichereinheit verbunden sein. Die Speichereinheit kann einen Cloud-Server, einen Flash-Speicher, einen EPROM oder eine magnetische Speichereinheit aufweisen. Die Auswerteeinheit kann eine Empfangseinheit aufweisen. Die Empfangseinheit kann ausgebildet sein, die Temperaturmesswerte von der Temperaturmesseinheit drahtlos, bspw. über Funk, WLAN, Bluetooth etc., und/oder leitungsgebunden zu empfangen. Die Auswerteeinheit kann ferner zumindest eine Schnittstelle zu der Sendeeinheit der Temperaturerfassungseinheit zum Einlesen von Sensorsignalen bzw. Temperaturmesswerten aufweisen. Die Auswerteeinheit kann ferner eine Schnittstelle zum Ausgeben von Daten oder Messwerten an eine Anzeigeeinheit aufweisen.

Die Auswerteeinheit kann insbesondere ausgebildet sein, in Abhängigkeit von zumindest zwei erfassten Temperaturen ein Signal auszugeben. Die Auswerteeinheit kann ausgebildet sein, anhand der empfangenen Temperaturmesswerte (und ggf. weiterer Informationen) mittels dem Fachmann bekannter Verfahren die Temperaturen zu berechnen, die Temperaturen über die Zeit abzuspeichern und diese mit vorgegebenen bzw. abgespeicherten Temperaturprofilen zu vergleichen. Die Auswerteeinheit kann hierbei ausgebildet sein, bei Erreichung, Unterschreitung oder Überschreitung definierter Differenzwerte bzw. Schwellenwerte zwischen den erfassten Temperaturen und den vorgegebenen bzw. abgespeicherten Temperaturprofilen ein Signal abzugeben. Die Differenzwerte bzw. Schwellenwerte können insbesondere manuell eingegeben, berechnet und/oder aus einer Tabelle ausgelesen werden.

Das Signal kann insbesondere ein Alarmsignal sein. Das Signal kann ein optisches und/oder ein akustisches und/oder ein kinästhetisches Signal sein. Das Signal kann einen Defekt und/oder einen Verschleiß und/oder eine Reparaturnotwendigkeit und/oder eine Wartungsnotwendigkeit der Rührvorrichtung signalisieren. Das Signal kann eine Information, bspw. eine oder mehrere erfasste Temperatur(en) oder einen oder mehrere Differenzwert(e) umfassen. Das Signal kann ausgebildet sein, um an einer Anzeigeeinheit anzeigbar zu sein.

Die Anzeigeeinheit kann ein Smartphone oder ein beliebiges anderes Endgerät, wie bspw. ein Tablet oder ein PC sein. Das Alarmsignal kann bspw. ausgewählt sein aus der Liste bestehend aus: SMS, E-Mail, Push-Notification, Telefonanruf.

Der vorliegenden Erfindung liegt die Erkenntnis zugrunde, dass eine mit einer Temperaturmesseinheit ausgestattete Rührvorrichtung sehr einfach, kostengünstig und robust auf Fehler überwacht werden kann, so dass eine entsprechende Person rechtzeitig alarmiert werden kann, bspw. über einen Defekt oder einen sich anbahnenden Defekt, so dass ein mögliches Verderben einer Flüssigkeit, insbesondere Milch, verhindert werden kann. Diese Art der Überwachung ist insbesondere deshalb möglich, da die Rührvorrichtung bzw. das Rührwerk in definierten Zeitabständen und für definierte Zeiträume aktiv ist, was eine abwechselnde Erwärmung und Abkühlung zur Folge hat. Hierdurch bilden sich charakteristische Temperaturen und/oder Temperaturkurven über die Zeit, welche Aufschluss geben über einen Defekt und/oder einen Verschleiß und/oder eine Reparaturnotwendigkeit und/oder eine Wartungsnotwendigkeit der Rührvorrichtung. Hierbei ist die Genauigkeit der Absoluttemperatur eher zweitrangig, weshalb die Temperaturmessung kostengünstig, auch über eine einfach nachgerüstete Temperaturmesseinheit, durchgeführt werden kann.

Vorteilhaft ist es, wenn die Temperaturerfassungseinheit ausgebildet ist, die Temperatur in dem Bereich der Rührvorrichtung durch thermischen Kontakt zu erfassen. Hierbei ist es insbesondere vorteilhaft, wenn die Temperaturerfassungseinheit einen Temperatursensor aufweist, welcher zur Erfassung der Temperatur an dem Bereich der Rührvorrichtung angeordnet ist. Durch diese Maßnahme kann auf sehr einfache und kostengünstige Art und Weise (Sensor und Montage) die Temperatur unmittelbar an der Rührvorrichtung erfasst werden.

Es ist außerdem vorteilhaft, wenn der Bereich, in dem die Temperatur erfasst wird, ein Oberflächenbereich, insbesondere ein Außenflächenbereich der Rührvorrichtung ist. Erfindungsgemäß weist die Rührvorrichtung einen Elektroantrieb auf, wobei der Bereich, in dem die Temperatur erfasst wird, ein Außenflächenbereich des Elektroantriebs, insbesondere eines Gehäuses und/oder einer Kühlfläche des Elektroantriebs ist. Gemäß einem Beispiel, das nicht Teil der vorliegenden Erfindung ist, weist die Rührvorrichtung eine Kupplungseinheit zur trennbaren Kopplung einer Antriebswelle eines Elektroantriebes mit einem Rührwekzeug auf, wobei der Bereich, in dem die Temperatur erfasst wird, ein Oberflächenbereich, insbesondere ein Außenflächenbereich der Kupplungseinheit ist. Da für die Überwachung keine genauen Absoluttemperaturen notwendig sind, kann durch diese Maßnahme eine sehr einfache und sichere Temperaturerfassung durchgeführt werden, welche ausreichend genau ist bzw. eine ausreichende zeitliche Auflösung bietet. Ferner kann durch die gezielte Temperaturmessung bzw. Positionierung des Temperatursensors an kritischen aber dennoch leicht zugänglichen Stellen ein sehr robustes "Frühwarnsystem" bereitgestellt werden.

Vorteilhaft ist es auch, wenn die Auswerteeinheit ausgebildet ist, die jeweilige Temperatur in definierten Zeitabständen, insbesondere in Zeitabständen von größer oder gleich 5 s bis kleiner oder gleich 10 min, insbesondere in Zeitabständen von ca. 5 min, und/oder für definierte Zeiträume, insbesondere für Zeiträume von größer oder gleich 0,1 s bis kleiner oder gleich 2 min, insbesondere punktuell zu empfangen. Hierbei ist es insbesondere vorteilhaft, wenn die Auswerteeinheit ausgebildet ist, die erfassten Temperaturen über die Zeit mit einem vorgegebenen Temperaturprofil zu vergleichen und/oder die Gradienten der erfassten Temperaturen über die Zeit zu ermitteln und mit einem vorgegebenen Gradiententemperaturprofil zu vergleichen, um in Abhängigkeit davon das Signal auszugeben. Diese Maßnahme trägt weiter zur Einfachheit der Überwachungsvorrichtung bei, da mit einem sehr geringen Ressourcenaufwand, da trotz der ressourcensparenden punktuellen und diskontinuierlichen Temperaturmessung diese dennoch eine ausreichende Genauigkeit bzw. zeitliche Auflösung für die Überwachung bzw. "Diagnose" bietet.

### Zeichnungen

Die Erfindung wird nachstehend anhand der beigefügten Zeichnungen beispielhaft näher erläutert. Es zeigen:
- Fig. 1: eine schematische Darstellung einer erfindungsgemäßen Flüssigkeitsbehälters mit einer erfindungsgemäßen Rührvorrichtung;
- Fig. 2: ein Diagramm mit zwei erfassten Temperaturkurven über die Zeit; und
- Fig. 3: ein Ablaufdiagramm eines Verfahrens zur Überwachung einer Rührvorrichtung.

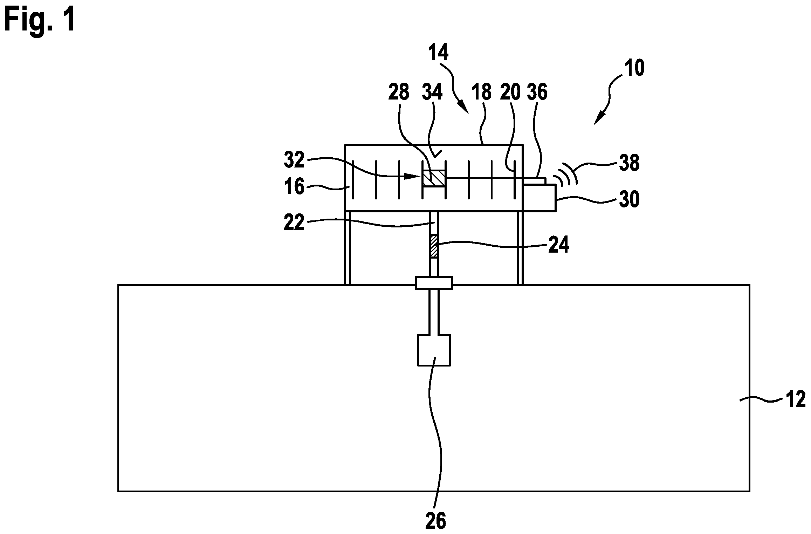

In Fig. 1 ist eine erfindungsgemäße Rührvorrichtung in ihrer Gesamtheit mit der Bezugsziffer 10 versehen.

Die Rührvorrichtung 10 ist an einem Flüssigkeitsbehälter 12 angeordnet. Der Flüssigkeitsbehälter 12 ist hierbei als Milchtank 12 ausgebildet.

Die Rührvorrichtung 10 weist erfindungsgemäß eine Überwachungsvorrichtung 14 auf. Die Rührvorrichtung 10 weist ferner einen Elektroantrieb 16 bzw. einen Elektromotor 16 auf.

Der Elektroantrieb 16 ist außen am Flüssigkeitsbehälter 12 bzw. Milchtank 12 angeordnet. Elektroantrieb 16 weist ein Gehäuse 18 mit Kühlflächen 20 bzw. Kühlrippen 20 auf. Der Elektroantrieb 16 weist ferner eine Antriebswelle 22 auf. Die Antriebswelle 22 ist wiederum über eine Kupplungseinheit 24 mit einem Rührwerkzeug 26 mechanisch trennbar verbunden. Das Rührwerkzeug 26 ist in dem Flüssigkeitsbehälter 12 angeordnet. Demnach kann mittels des Elektroantriebes 16 ein Drehmoment auf das Rührwerkzeug 26 übertragen werden, um eine Flüssigkeit, insbesondere Milch in dem Flüssigkeitsbehälter 12 zu verrühren.

Die Überwachungsvorrichtung 14 weist eine Temperaturerfassungseinheit 28 und eine Auswerteeinheit 30 auf.

Die Temperaturerfassungseinheit 28 ist als Temperatursensor 28 ausgebildet.

Die Temperaturerfassungseinheit 28 bzw. der Temperatursensor 28 ist in einem Bereich 32 der Rührvorrichtung 10 angeordnet. Der Bereich 32 ist hierbei ein Oberflächenbereich 34 bzw. ein Außenflächenbereich 34 der Rührvorrichtung 10. Erfindungsgemäß ist der Bereich 32 ein Außenflächenbereich 34 der Elektroantriebes 16 bzw. des Gehäuses 18 und der Kühlrippen 20 des Elektroantriebes 16. Demnach ist der Temperatursensor 28 über den Bereich 32 in Kontakt mit dem Elektroantrieb 16, so dass er in dem Bereich 32 eine Temperatur der Rührvorrichtung 10 bzw. des Elektroantriebes 16 durch thermischen Kontakt erfassen kann.

Gemäß einem Beispiel, das nicht Teil der vorliegenden Erfindung ist, ist es jedoch auch denkbar, dass der Bereich 32, in dem die Temperatur erfasst wird, ein Oberflächenbereich 34 bzw. ein Außenflächenbereich 34 der Kupplungseinheit 24 ist. In diesem Fall wäre der Temperatursensor 28 über den Bereich 32 in Kontakt mit Kupplungseinheit 24, so dass er in dem Bereich 32 eine Temperatur der Kupplungseinheit 24 thermischen Kontakt erfassen kann. Die Auswerteeinheit 30 ist über eine elektrische Leitung 36 mit der Temperaturerfassungseinheit 28 bzw. dem Temperatursensor 28 verbunden. Demnach ist die Auswerteeinheit 30 ausgebildet, die von dem Temperatursensor 28 erfassten Temperaturmesswerte über die elektrischen Leitung 36 zu empfangen. Die Auswerteeinheit 30 ist ferner ausgebildet, in Abhängigkeit von den erfassten Temperaturen bzw. Temperaturmesswerten ein Signal 38 auszugeben. Hierbei vergleicht die Auswerteeinheit 30 die von der Temperaturerfassungseinheit 28 erfassten Temperaturen bzw. Temperaturmesswerte über die Zeit mit einem vorgegebenen Temperaturprofil, um in Abhängigkeit davon das Signal 38 auszugeben. Im Einzelnen, berechnet die Auswerteeinheit 30 anhand der Temperaturmesswerte die Temperaturen, speichert die Temperaturen diese über die Zeit ab und vergleicht diese mit vorgegebenen bzw. abgespeicherten Temperaturprofilen.

Bei Erreichung, Unterschreitung oder Überschreitung definierter Differenzwerte bzw. Schwellenwerte zwischen den erfassten Temperatur und den vorgegebenen Temperaturprofilen gibt die Auswerteeinheit 30 das Signal 38 ab. Die Differenzwerte bzw. Schwellenwerte können insbesondere manuell eingegeben, berechnet und/oder aus einer Tabelle ausgelesen werden. Das Signal 38, welches als Alarmsignal 38 ausgebildet ist und bspw. einen Defekt und/oder einen Verschleiß und/oder eine Reparaturnotwendigkeit und/oder eine Wartungsnotwendigkeit des Elektromotors 16 signalisiert, kann an eine (nicht dargestellte) Anzeigeeinheit ausgegeben bzw. übertragen werden.

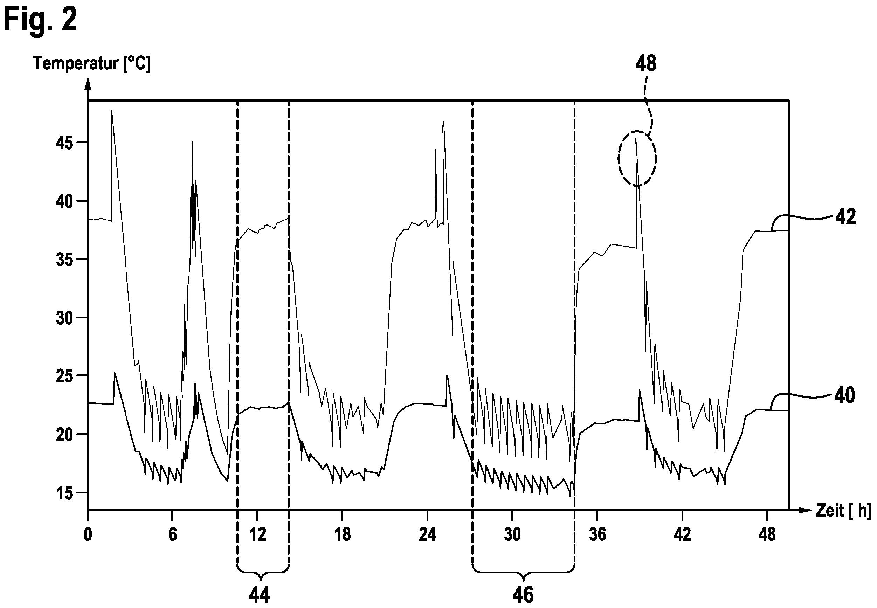

Die Anzeigeeinheit kann ausgebildet sein, die erfassten Temperaturen zu empfangen und auf einem Display für einen Benutzer zu visualisieren, bspw. in einem Kurvendiagramm, wie in Fig. 2 dargestellt. Die Anzeigeeinheit kann ferner ausgebildet sein, das vorangehend erläuterte Signal 38 zu empfangen und auszugeben, bspw. optisch, akustisch oder kinästhetisch. Die Anzeigeeinheit kann auch ausgebildet sein, die Historie der ermittelten Temperaturen anzuzeigen.

Anstatt der Temperaturen ist es auch denkbar, die Gradienten der erfassten Temperaturen über die Zeit zu ermitteln und mit einem vorgegebenen Gradiententemperaturprofil zu vergleichen.

Um Ressourcen zu sparen, ist der Auswerteeinheit 30 ausgebildet, die jeweilige Temperatur in definierten Zeitabständen von 5 min punktuell zu empfangen. Diese zeitliche Messabfolge bzw. Auflösung ist für eine Überwachung bzw. Diagnose der Rührvorrichtung 10 ausreichend.

Die Auswerteeinheit 30 ist außerdem zur Stromversorgung mit einer (nicht dargestellten) Energieversorgungseinheit elektrisch verbunden.

Fig. 2 zeigt beispielhaft zwei Temperaturkurven 40, 42 zweier Elektroantriebe 16 über die Zeit (Ordinate: Temperatur in °C; Abszisse: Zeit in Stunden). Die Temperaturkurven 40, 42 sind hierbei die Verbindungslinien der am jeweiligen Elektroantrieb 16 in definierten Zeitabständen erfassten Temperaturen über die Zeit. Die Temperaturkurven 40, 42 weisen jeweils charakteristische Zeitbereiche 44, 46 auf. Der Zeitbereich 44 ist ein Dauerrührbereich 44, in welchem für längere Zeit ununterbrochen gerührt wird. Wie aus Fig. 2 ersichtlich, ist der Dauerrührbereich 44 durch einen deutlichen Anstieg der Temperatur und ein längeres Verharren auf hohem Niveau charakterisiert. Der Zeitbereich 46 ist ein Schaltzeituhrbereich 46, in welchem die Rührvorrichtung 10 mittels einer Schaltzeituhr gesteuert wird. Wie aus Fig. 2 ersichtlich, ist der Schaltzeituhrbereich 46 durch Temperaturschwingungen mit der Frequenz der Schaltzeituhr charakterisiert.

Zusätzlich kann die sehr hohe Absolutbetriebstemperatur bei der Temperaturkurve 42 im Bereich 48 von über 40°C als ein Hinweis auf einen Verschleiß bzw. eine Reparaturnotwendigkeit gedeutet werden.

Wenn regelmäßig niedrigere Betriebstemperaturen als im Normalbetrieb an der Kupplungseinheit 24 erfasst werden, könnte bspw. auf einen Kupplungsdefekt geschlossen werden und ein entsprechendes Signal 38 ausgegeben werden.

Demnach kann erfindungsgemäß in Abhängigkeit der erfassten Temperatur bzw. den erfassten Temperaturen und ggf. durch Vergleich mit vorgegebenen Temperaturen bzw. Temperaturprofilen das Signal 38 ausgegeben werden, um eine entsprechende Person rechtzeitig zu informieren bzw. zu alarmieren, so dass ein mögliches Verderben der Flüssigkeit, insbesondere der Milch verhindert werden kann.

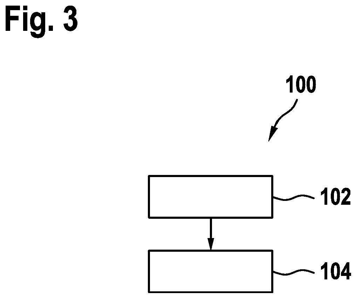

Fig. 3 zeigt ein Ablaufdiagramm eines erfindungsgemäßen Verfahrens 100 zur Überwachung einer Rührvorrichtung. Das Verfahren 100 umfasst einen Schritt 102 des Erfassens einer Temperatur in einem Bereich der Rührvorrichtung mittels einer Temperaturerfassungseinheit. Das Verfahren 100 umfasst ferner einen Schritt 104 des Ausgebens eines Signals in Abhängigkeit von der erfassten Temperatur mittels einer Auswerteeinheit.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Rührvorrichtung, insbesondere für einen Flüssigkeitsbehälter (12), mit einer Überwachungsvorrichtung (14) zur Überwachung der Rührvorrichtung (10), wobei die Überwachungsvorrichtung (14) eine Temperaturerfassungseinheit (28), welche ausgebildet ist, eine Temperatur in einem Bereich (32) der Rührvorrichtung (10) zu erfassen, und eine Auswerteeinheit (30), welche ausgebildet ist, in Abhängigkeit von der erfassten Temperatur ein Signal (38) auszugeben, aufweist, mit einen Elektroantrieb (16), wobei der Bereich (32), in dem die Temperatur erfasst wird, ein Außenflächenbereich (34) des Elektroantriebs (16), insbesondere eines Gehäuses (18) und/oder einer Kühlfläche (20) des Elektroantriebs (16) ist, **dadurch gekennzeichnet, dass** das Signal (38) einen Defekt und/oder einen Verschleiß und/oder eine Reparaturnotwendigkeit und/oder eine Wartungsnotwendigkeit der Rührvorrichtung (10) signalisiert.

2. Rührvorrichtung (10) nach Anspruch 1, **dadurch gekennzeichnet, dass** die Auswerteeinheit (30) ausgebildet ist, die jeweilige Temperatur in definierten Zeitabständen, insbesondere in Zeitabständen von größer oder gleich 5 s bis kleiner oder gleich 10 min, insbesondere in Zeitabständen von ca. 5 min, und/oder für definierte Zeiträume, insbesondere für Zeiträume von größer oder gleich 0,1 s bis kleiner oder gleich 2 min, insbesondere punktuell zu empfangen.

3. Rührvorrichtung (10) nach einem der vorhergehenden Ansprüche, **dadurch gekennzeichnet, dass** die Auswerteeinheit (30) ausgebildet ist, die erfassten Temperaturen über die Zeit mit einem vorgegebenen Temperaturprofil zu vergleichen und/oder die Gradienten der erfassten Temperaturen über die Zeit zu ermitteln und mit einem vorgegebenen Gradiententemperaturprofil zu vergleichen, um in Abhängigkeit davon das Signal (38) auszugeben.

4. Rührvorrichtung (10) nach einem der vorhergehenden Ansprüche, **dadurch gekennzeichnet, dass** das Signal (38) an eine Anzeigeeinheit ausgegeben wird.

5. Flüssigkeitsbehälter, insbesondere Milchtank (12), mit einer Rührvorrichtung (10) nach einem der vorhergehenden Ansprüche.

6. Verfahren zur Überwachung einer Rührvorrichtung (10) mit einem Elektroantrieb (16) mit den Schritten: Erfassen (102) einer Temperatur in einem Außenflächenbereich (34) des Elektroantriebs (16), insbesondere eines Gehäuses (18) und/oder einer Kühlfläche (20) des Elektroantriebs (16) mittels einer Temperaturerfassungseinheit (28), und Ausgeben (104) eines Signals (38) in Abhängigkeit von der erfassten Temperatur mittels einer Auswerteeinheit (30), **dadurch gekennzeichnet, dass** das Signal (38) einen Defekt und/oder einen Verschleiß und/oder eine Reparaturnotwendigkeit und/oder eine Wartungsnotwendigkeit der Rührvorrichtung (10) signalisiert.

## Claims

1. Stirring apparatus, in particular for a liquid container (12), having a monitoring apparatus (14) for monitoring the stirring apparatus (10), wherein the monitoring apparatus (14) comprises a temperature recording unit (28), which is designed to record a temperature in a region (32) of the stirring apparatus (10), and an evaluation unit (30), which is designed to take the recorded temperature as a basis for outputting a signal (38), having an electric drive (16), wherein the region (32) in which the temperature is recorded is an outer surface region (34) of the electric drive (16), in particular of a housing (18) and/or of a cooling surface (20) of the electric drive (16), **characterized in that** the signal (38) signals a fault and/or wear and/or a need for repair and/or a need for maintenance of the stirring apparatus (10).

2. Stirring apparatus (10) according to Claim 1, **characterized in that** the evaluation unit (30) is designed to receive the respective temperature, in particular point by point, at defined intervals of time, in particular at intervals of time of between greater than or equal to 5 s and less than or equal to 10 min, in particular at intervals of time of approximately 5 min, and/or for defined periods of time, in particular for periods of time of between greater than or equal to 0.1 s and less than or equal to 2 min.

3. Stirring apparatus (10) according to either of the preceding claims, **characterized in that** the evaluation unit (30) is designed to compare the recorded temperatures over time with a specified temperature profile and/or to determine the gradients of the recorded temperatures over time and to compare said gradients with a specified gradient temperature profile, in order to take this as a basis for outputting the signal (38).

4. Stirring apparatus (10) according to one of the preceding claims, **characterized in that** the signal (38) is output to a display unit.

5. Liquid container, in particular milk tank (12), having a stirring apparatus (10) according to one of the preceding claims.

6. Method for monitoring a stirring apparatus (10) having an electric drive (16), having the steps of: recording (102) a temperature in an outer surface region (34) of the electric drive (16), in particular of a housing (18) and/or of a cooling surface (20) of the electric drive (16), by means of a temperature recording unit (28), and outputting (104) a signal (38) on the basis of the recorded temperature by means of an evaluation unit (30), **characterized in that** the signal (38) signals a fault and/or wear and/or a need for repair and/or a need for maintenance of the stirring apparatus (10) .

## Revendications

1. Dispositif d'agitation, notamment pour un réservoir à liquide (12), comprenant un dispositif de surveillance (14) destiné à surveiller le dispositif d'agitation (10), le dispositif de surveillance (14) possédant une unité d'acquisition de température (28), laquelle est configurée pour acquérir une température dans une zone (32) du dispositif d'agitation (10), et une unité d'interprétation (30), laquelle est configurée pour délivrer un signal (38) en fonction de la température acquise, comprenant un mécanisme d'entraînement électrique (16), la zone (32) dans laquelle est acquise la température étant une zone de surface extérieure (34) du mécanisme d'entraînement électrique (16), notamment d'un boîtier (18) et/ou d'une surface de refroidissement (20) du mécanisme d'entraînement électrique (16), **caractérisé en ce que** le signal (38) signale un défaut et/ou une usure et/ou une nécessité de réparation et/ou une nécessité de maintenance du dispositif d'agitation (10) .

2. Dispositif d'agitation (10) selon la revendication 1, **caractérisé en ce que** l'unité d'interprétation (30) est configurée pour recevoir la température respective à des intervalles de temps définis, notamment à des intervalles de temps égaux ou supérieurs à 5 s à inférieurs ou égaux à 10 min., notamment à des intervalles de temps d'environ 5 min. et/ou pendant des espaces de temps définis, notamment pendant des espaces de temps égaux ou supérieurs à 0,1 s à inférieurs ou égaux à 2 min, notamment ponctuellement.

3. Dispositif d'agitation (10) selon l'une des revendications précédentes, **caractérisé en ce que** l'unité d'interprétation (30) est configurée pour comparer les températures acquises dans le temps à un profil de température prédéfini et/ou déterminer les gradients des températures acquises dans le temps et les comparer à un profil prédéfini de température en gradient afin de délivrer le signal (38) en fonction de cela.

4. Dispositif d'agitation (10) selon l'une des revendications précédentes, **caractérisé en ce que** le signal (38) est délivré au niveau d'une unité d'affichage.

5. Réservoir à liquide, notamment cuve de lait (12), comprenant un dispositif d'agitation (10) selon l'une des revendications précédentes.

6. Procédé de surveillance d'un dispositif d'agitation (10) comprenant un mécanisme d'entraînement électrique (16), comprenant les étapes suivantes : acquisition (102) d'une température dans une zone de surface extérieure (34) du mécanisme d'entraînement électrique (16), notamment d'un boîtier (18) et/ou d'une surface de refroidissement (20) du mécanisme d'entraînement électrique (16) au moyen d'une unité d'acquisition de température (28), et délivrance (104) d'un signal (38) en fonction de la température acquise au moyen d'une unité d'interprétation (30), **caractérisé en ce que** le signal (38) signale un défaut et/ou une usure et/ou une nécessité de réparation et/ou une nécessité de maintenance du dispositif d'agitation (10).
